# EUROPEAN PATENT SPECIFICATION

(11) **EP 2 484 251 B1**
(45) Date of publication and mention of the grant of the patent: **28.08.2013**
(21) Application number: 11153262.8
(22) Date of filing: 03.02.2011
(51) Int. Cl.: A47J 31/057, A47J 31/10, A47J 31/18, A47J 31/46

(54) **Double receptacle fully automated tea machine with temperature regulation valve**
Vollautomatische Teemaschine mit doppeltem Behälter mit Temperaturregelventil
Machine à thé automatique complète à double réceptacle ayant une soupape de régulation de la température

(43) Date of publication of application: 08.08.2012
(73) Proprietor: Eksen Makine Sanayi ve Ticaret A.S., 41480 Kocaeli (TR)
(72) Inventor: Tahincioglu, Besim, 41480 Kocaeli (TR)
(74) Representative: Sevinç, Erkan

(56) References cited:
- EP-A2- 2 103 234
- US-A- 4 361 750
- US-A- 4 744 291

## Description

### Technical Field of the Invention

The present invention relates to a tea preparing apparatus and more particularly a double receptacle automatic tea machine.

### Background of the Invention

Tea is traditionally consumed on a daily basis in large quantities in the country of the applicant. A good flavor tea is believed to be prepared by way of boiling water in a first receptacle and steeping tea leaves in hot water in a second receptacle.

A common problem of automated tea preparing machines is that they provide only a limited automation by which water is boiled in a first receptacle and then kept warm therein as long as preferred to allow brewing of tea leaves in a second top receptacle. Therefore, to complete brewing, the user himself must add water to the top receptacle from the boiling receptacle; which means a step which is merely user dependant to the extent that in the absence of user intervention, the whole tea preparing process is aborted is in question.

Nevertheless, it is observed that tea consumers are not reluctant to involve in the tea preparing process and yet prefer such "half-automated" tea preparing machines to conventional non-electrical tea preparing methods. A fully automated tea preparing apparatus having a reasonable price tag and which can transfer boiled water to the top receptacle where dry tea leaves lie is yet believed to be a major step toward consumer satisfaction.

Another problem arising in association with the "good flavor" of the prepared tea is the temperature of the water in the boiling receptacle which is transferred therefrom to the top receptacle. It is believed that a "good flavor" is obtained only if dry tea leaves are exposed to hot water the temperature of which is within a predetermined range. Otherwise flavor of the leaves is not adequately extracted.

To ensure a "good flavor", the present invention proposes a safe temperature margin within the range allowing transfer of the boiled water at the required temperature. To this end, earlier research of the applicant resulted in a mechanical thermostat embodiment according to which a disc type bimetal thermostat which can reverse its warping *direction* in response to temperature change is provided. Said mechanical thermostat is in conduction communication with a boss, the latter in return accumulating heat to actuate said thermostat within a predetermined temperature range.

Although the above solution is a satisfactory one in terms of the results achieved to provide transfer of heated water at a predetermined temperature, the present invention achieves this object in the manner that an automated apparatus having a further reduced price tag can be manufactured, i.e. without using a mechanical thermostat and a boss.

A patent reference prominent in the art can be acknowledged as EP 2 103 234, which discloses a machine with a tea preparing pot for automatic water spraying process over tea leaves, and for preparing tea. A two-way valve, i.e. safety valve, provides sealing between edges of the pot against scalding during discharging of the pot.

The present invention therefore provides a fully automated tea machine having a special valve whose dimension and weight is specially adapted to provide regulation of water transfer temperature to adequately extract flavor of the leaves.

### Objects of the Invention

Primary object of the present invention is to provide an electrical tea machine which is fully automated to the extent that it can carry out both boiling and brewing operations without user intervention being necessitated.

Another object of the present invention is to provide a fully automated tea machine having a safe temperature margin which enables transfer of the boiled water at the required temperature.

Another object of the present invention is to provide a fully automated tea machine simpler in construction and cheaper and therefore more competitive in terms of the final consumer price.

### Summary of the Invention

The present invention proposes a domestic appliance and specifically a tea machine having a first receptacle for boiling water and a second receptacle containing plant leaves to be brewed. Said second receptacle is conventionally placed on top of said first receptacle.

The electrical household appliance of the invention comprises a first receptacle for boiling water and a second receptacle suitable for placing on top of said first receptacle such that plant leaves are placed therein to be brewed in heated water. Said first receptacle comprises a bidirectional valve selectively establishing fluid communication with said second receptacle in response to presence of a pusher mechanism of said first receptacle in engaging relationship with said bidirectional valve.

### Brief Description of the Figures

Accompanying drawings are given solely for the purpose of exemplifying a fully automated tea machine whose advantages over prior art were outlined above and will be explained in detail hereinafter:
Fig. 1 demonstrates a cross-sectional view of the tea apparatus according to the present invention.
Fig. 2a and 2b demonstrate cross-sectional views of the bidirectional valve selectively allowing water transfer to the upper receptacle according to the present invention.
Fig. 3a and 3b demonstrate the evacuation conduit and the inlet conduit in different positions of the valve according to the present invention.
Fig. 4 demonstrates configuration of the greater wattage resistance with respect to the lower wattage resistance according to the present invention.

### Detailed Description of the Invention

Referring now to the figures outlined above, the present invention proposes an electrical household appliance for preparing tea in a traditional manner, i.e. by way of using separate boiling and brewing receptacles (respectively 19 and 15). The appliance comprises a first receptacle (19) for boiling water prior to brewing and a second receptacle (15) in which tea leaves are placed and brewed in hot water accordingly.

Both receptacles (19, 15) are put one above another to allow thermal communication and heat energy radiated from a heat source in communication with said first receptacle (19) also reach said second receptacle (15). The base of said second receptacle (15) therefore covers the open upper end of said first receptacle (19) in a conventional manner.

The heating arrangement of the tea preparation apparatus comprises a first electrical heating means (3) having a greater resistance with respect to a second electrical heating means (4) with a lower active power dissipation.

As is generally practiced in the available art, effective power consumption by said heat source is lowered during brewing. Temperature in the lower receptacle may be controlled by means of a plurality of control arrangements and sensors; that is while temperature in the lower receptacle (19) may be kept in a near-boiling temperature, different control schemes to allow continuous or discontinuous powering of the heat source can be applied.

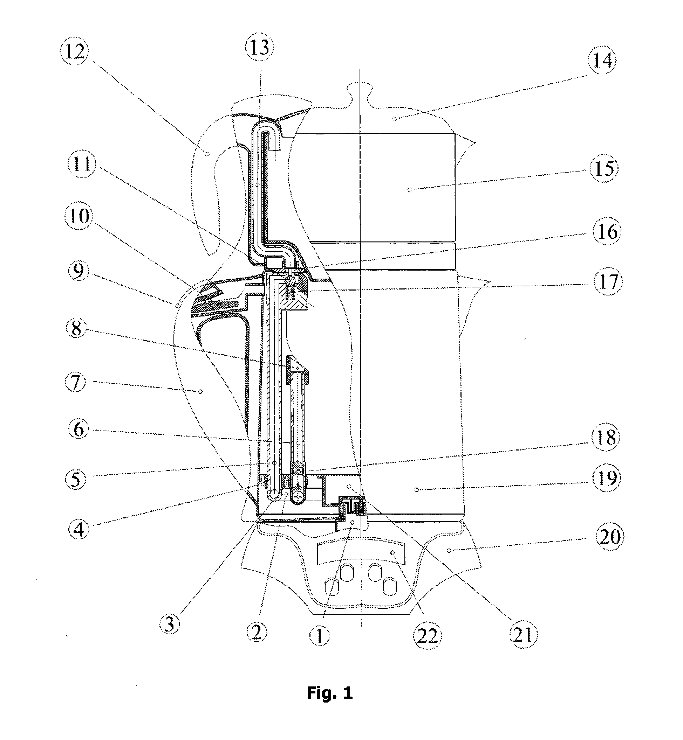

Referring to Fig. 1, the lower receptacle (19) according to the present invention comprises a handle (7) joined to the lower receptacle (19) body. The machine conventionally comprises a steam switch (10) and a steam switch button (9). The apparatus can typically be set to boiling mode by said steam switch button (9).

The upper receptacle comprises a lid (14) and a handle (12) as seen in Fig. 1. The lower receptacle (19) according to the present invention is connected to an electrical heater base (20), said base (20) comprising an electrical connector (21) associated with an electrical adaptor (1).

The tea preparing apparatus according to the invention comprises an electronic control unit (22) allowing a user start the apparatus automatically at a specified time or manually. The boiling receptacle (19) should be filled with water prior to switching the apparatus on. Automatic transfer of boiled water will be initiated only if the fluid communication from the lower receptacle (19) to the upper receptacle (15) is established as explained below.

The upper receptacle (15) according to the present invention comprises a pusher mechanism (16) having an axial rod slidably engaged within a spring housing in which a spring (17) biases a ball against said axial rod. Said spring loaded ball in said spring housing act as bidirectional valve (11) selectively establishing fluid communication with said upper receptacle (15) or teapot (15).

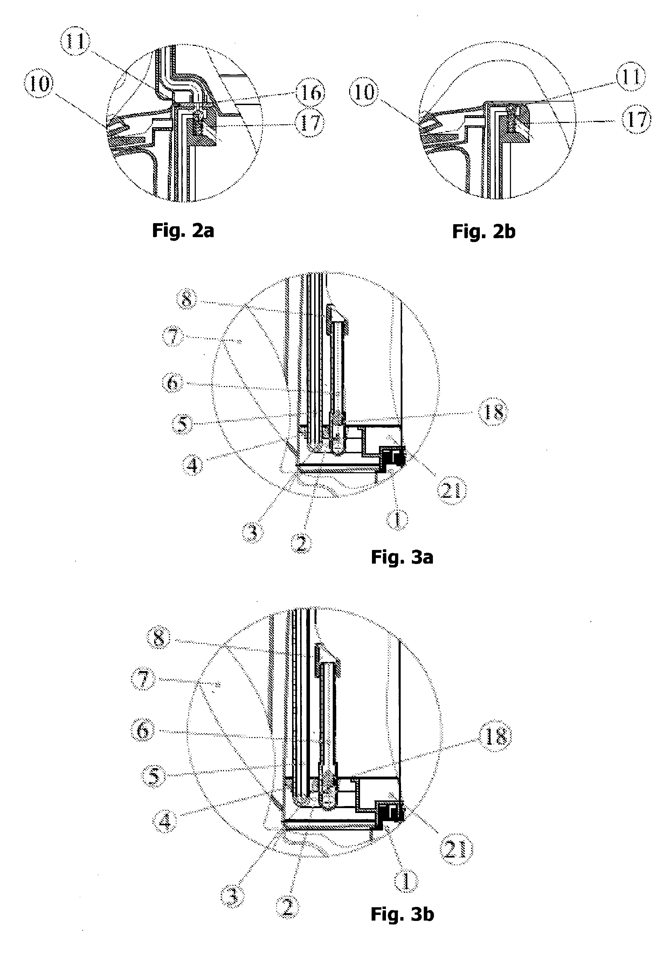

When said upper receptacle (15) is appropriately positioned on top of said lower receptacle (19), a fluid communication is established between a boiler evacuation conduit (5) and an intake orifice equipped with said pusher mechanism (16) of a teapot (15) conduit (13). Said teapot (15) conduit (13) therefore provides that boiled water is poured out of its vent down, on top of tea leaves lying on the ground of the receptacle (15). As seen in Fig. 2b, in the absence of the teapot (15) appropriately positioned with its pusher mechanism (16) having engaging relationship with said bidirectional valve (11), said bidirectional valve (11)'s ball joint is freely pushed up by said helical spring (17) such that boiled water rising due to siphon action in said evacuation conduit (5) is conveyed from said conduit's (5) upper end back to the lower receptacle (19) passing through said spring (17).

The initiation of the siphon action allowing transfer of boiled water to said teapot (15) as explained above is controlled as to the temperature of the water to be transferred as this is believed to be crucial in the flavor of the brewed tea.

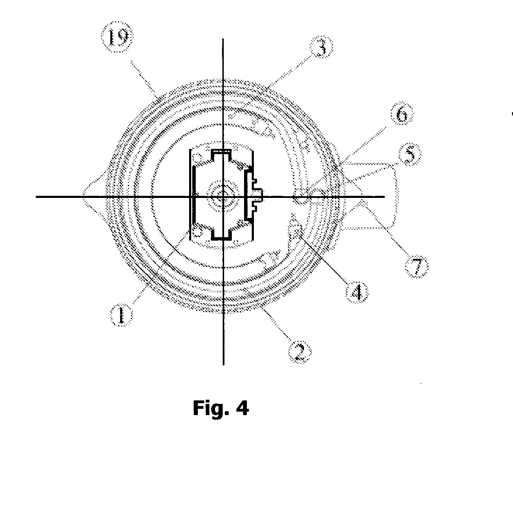

Hot water, flowing into an inlet conduit (6) from an inlet of said inlet conduit (6) advances down the conduit (6) and reaches an evacuation conduit (5) though a intermediary conduit (2) perimetrically lying on the ground of the lower receptacle (19). Flow of water in the reverse direction is blocked by a valve (18) downstream said inlet conduit (6). Fig. 4 demonstrates said evacuation conduit (6) and said inlet conduit (6) extending perpendicular in the direction of said upper receptacle (15) with respect to said intermediary conduit's (2) plane parallel to the ground of said lower receptacle (19).

Fig. 4 also demonstrate configuration of the greater wattage resistance (3) with respect to the lower wattage resistance (4). The greater wattage resistance (3) is encircled by the perimetrically extending lower wattage resistance (4), which is disposed directly on top of said intermediary conduit (2).

When water in the lower receptacle (19) is boiled, said steam switch (10) activates "keep warm" mode and power is only supplied to said lower wattage resistance (4) instead of said greater wattage resistance (3).

Said lower wattage resistance (4) is disposed directly on top of said intermediary conduit (2), the latter perimetrically lying on the ground of the lower receptacle (19). To this end, water flowing from said inlet conduit (6) to said intermediary conduit (2) is continually heated by said greater wattage resistance (3), which is not in direct contact with said intermediary conduit (2) but in the proximity of the same. Therefore, water in said intermediary conduit (2) starts producing steam, which in turn advances said valve (18) in said inlet conduit (6), thereby blocking water inflow from said lower receptacle (19) through said inlet conduit (6).

Steam pressure while moving up said valve (18) also forces heated water up said evacuation conduit (6). Siphoning action due to steam pressure starts at around 50 °C. Subsequent to transfer of the available water in said intermediary conduit (2), pressure drops and said valve (18) is moved down thereupon so as to reinitiate water flow from said inlet conduit (6). This process continues in cycles as water in said lower receptacle (19) is being heated.

As temperature in said lower receptacle (19) rises, water reaching said intermediary conduit (2) becomes hotter and a faster vaporization occurs such that said valve (18) is locked in blocking position much earlier than it is locked at lower temperatures, which results in smaller amounts of water allowed into said intermediary conduit (2).

To this end, a special calibration of said valve (18) in terms of areal density, i.e. the proportion of its largest cross-section to its weight, is necessary to provide water transfer at higher temperatures, i.e. above 80 °C. A valve (18) having a greater weight than required will be inappropriate as steam pressure will not be adequate to lock it and water will return to sad lower receptacle (19) as pressure rises. On the other hand, a valve (18) having a lower weight than required will be problematic in that it will lock too early before a sufficient amount of water fills said intermediary conduit (2), thereby resulting in a substantially slowed water transfer to said upper receptacle (15).

When water in said lower receptacle (19) is boiled, said lower wattage resistance (4) is powered instead of said greater wattage resistance (3). When siphoning action starts, the temperature in said lower receptacle (19) is at around 50 °C and due to the fine calibration of said valve (18) in terms of areal density, water transfer to the upper receptacle (15) can continuously be effected and temperature in said upper receptacle (15) in which tea leaves are present, is adequately high, i.e. reaches as high as 90 to 94 °C.

The areal density of said valve (18) is measured in mm²/gram as the proportion of the largest cross-section of said valve (18) in said inlet conduit (6) to its weight. To this end, it is established that an areal density of 0,018-0,021 mm²/gram is necessary for the desired effect, i.e. preventing said valve (18) from being locked before said intermediary conduit (2) is filled with water and preventing said valve (18) from being too heavy for steam pressure to be able to lock it. Said inlet conduit (6) portion around said valve (18) is in cylindrical form, i.e. has a longitudinally constant cross-section around said valve (18). A mechanical filter (8) may be arranged at the inlet of said inlet conduit (6).

In a nutshell, the present invention proposes an electrical household appliance comprising a first receptacle (19) for boiling water and a second receptacle (15) in thermal communication with said first receptacle (19) and in which plant leaves are placed in heated water for brewing. Said second receptacle (15) is also suitable for placing on top of said first receptacle (19) such that the base of said second receptacle (15) cover the upper open end of said first receptacle (19). Said first receptacle (19) comprises a bidirectional valve (11) selectively establishing fluid communication with said second receptacle (15) in response to presence of a pusher mechanism (16) of said first receptacle (15) in engaging relationship with said bidirectional valve (11). Said first receptacle (19) further comprises an inlet conduit (6) in liquid communication with said lower receptacle (19) and is connected to an evacuation conduit (5) whose end leads to said bidirectional valve (11). Said inlet conduit (6) comprises a valve (18) having an areal density of 0,018-0,021 mm²/gram.

## Claims

1. An electrical household appliance comprising a first receptacle (19) for boiling water and a second receptacle (15) in thermal communication with said first receptacle (19) and in which plant leaves are placed in heated water for brewing, said second receptacle (15) also being suitable for placing on top of said first receptacle (19) such that the base of said second receptacle (15) cover the upper open end of said first receptacle (19) wherein
said first receptacle (19) comprises a bidirectional valve (11) selectively establishing fluid communication with said second receptacle (15) in response to presence of a pusher mechanism (16) of said second receptacle (15) in engaging relationship with said bidirectional valve (11) and
said first receptacle (19) further comprises an inlet conduit (6) in liquid communication with said lower receptacle (19) and is connected to an evacuation conduit (5) whose end leads to said bidirectional valve (11) **characterized in that**,
said inlet conduit (6) comprises a valve (18) having an areal density of 0,018-0,021 mm²/gram.

2. An electrical household appliance as set forth in Claim 1 wherein said pusher mechanism (16) has a rod slidably engaged within a spring housing of said bidirectional valve (11) in which a spring (17) biases a ball against said rod.

3. An electrical household appliance as set forth in Claim 1 or 2 wherein said bidirectional valve (11) conveys heated water back to said first receptacle (19) in response to the absence of said pusher mechanism (16) of said second receptacle (15)

4. An electrical household appliance as set forth in Claim 1 wherein said inlet conduit (6) is connected to said evacuation conduit (5) though an intermediary conduit (2) perimetrically lying on the ground of said lower receptacle (19).

5. An electrical household appliance as set forth in Claim 1 or 4 wherein said evacuation conduit (5) and said inlet conduit (6) extend perpendicular with respect to said intermediary conduit's (2) plane parallel to the ground of said lower receptacle (19).

6. An electrical household appliance as set forth in any of previous claims wherein said appliance comprises a first electrical heating means (3) having a greater resistance with respect to a second electrical heating means (4) with a lower resistance.

7. An electrical household appliance as set forth in Claim 6 wherein said greater wattage resistance (3) is encircled by the perimetrically extending lower wattage resistance below which said intermediary conduit (2) is disposed.

## Patentansprüche

1. Elektrisches Haushaltsgerät mit einem ersten Behälter (19) zum Aufkochen von Wasser und einem zweiten Behälter (15), der sich in thermischer Verbindung mit dem ersten Behälter (19) befindet und in den Pflanzenblätter in erhitztes Wasser zum Aufbrühen gegeben werden, wobei der zweite Behälter (15) auch dazu geeignet ist, auf dem ersten Behälter (19) platziert zu werden, so dass der Boden des zweiten Behälters (15) das obere, offene Ende des ersten Behälters (19) bedeckt, wobei
der erste Behälter (1) ein bidirektionales Ventil (11) aufweist, das selektiv eine Fluidverbindung mit dem zweiten Behälter (15) herstellt in Reaktion auf die Gegenwart eines sich in Eingriff mit dem bidirektionalen Ventil (11) befindenden Stößelmechanismus (16) des zweiten Behälters (15), und
der erste Behälter (19) ferner eine Einlassleitung (6) in flüssigkeitsleitender Verbindung mit dem unteren Behälter (19) aufweist und mit einer Entleerungsleitung (5) verbunden ist, deren Ende zu dem bidirektionalen Ventil (11) führt,
**dadurch gekennzeichnet, dass** die Einlassleitung (6) ein Ventil (18) mit einer Flächendichte von 0,018 bis 0,021 mm²/g aufweist.

2. Elektrisches Haushaltsgerät nach Anspruch 1, bei dem der Stößelmechanismus (16) einen Stab umfasst, der sich in gleitendem Eingriff innerhalb eines Federgehäuses des bidirektionalen Ventils (11) befindet, in dem eine Feder (17) eine Kugel gegen den Stab drängt.

3. Elektrisches Haushaltsgerät nach Anspruch 1 oder 2, bei dem das bidirektionale Ventil (11) in Reaktion auf die Abwesenheit des Stößelmechanismus (16) des zweiten Behälters (15) erhitztes Wasser zurück zum ersten Behälter (19) leitet.

4. Elektrisches Haushaltsgerät nach Anspruch 1, bei dem die Einlassleitung (6) mit der Entleerungsleitung (5) durch eine Zwischenleitung (2) verbunden ist, die auf dem Grund des unteren Behälters (19) am Umfangsrand liegt.

5. Elektrisches Haushaltsgerät nach Anspruch 1 oder 4, bei dem die Entleerungsleitung (5) und die Einlassleitung (6) sich rechtwinklig zur parallel zum Grund des unteren Behälters (19) verlaufenden Ebene der Zwischenleitung (2) erstrecken.

6. Elektrisches Haushaltsgerät nach einem der vorhergehenden Ansprüche, bei dem das Gerät eine erste elektrische Heizeinrichtung (3) mit einem größeren Widerstand bezüglich einer zweiten elektrischen Heizeinrichtung (4) mit einem niedrigeren Widerstand hat.

7. Elektrisches Haushaltsgerät nach Anspruch 6, bei dem der größere elektrische Leistungswiderstand (3) von dem sich in Umfangsrichtung erstreckenden geringeren elektrischen Leistungswiderstand umgeben ist, unterhalb dessen die Zwischenleitung (2) angeordnet ist.

## Revendications

1. Appareil électroménager comprenant un premier réceptacle (19) pour faire bouillir de l'eau et un deuxième réceptacle (15) en communication thermique avec ledit premier réceptacle (19) et dans lequel des feuilles de plante sont placées dans l'eau chauffée pour infusion, ledit deuxième réceptacle (15) étant également approprié pour être placé au-dessus dudit premier réceptacle (19) de sorte que la base dudit deuxième réceptacle (15) recouvre l'extrémité supérieure ouverte dudit premier réceptacle (19), dans lequel
ledit premier réceptacle (19) comprend une valve bidirectionnelle (11) établissant de manière sélective une communication fluidique avec ledit deuxième réceptacle (15) en réponse à la présence d'un mécanisme de poussée (16) dudit deuxième réceptacle (15) dans une relation de mise en prise avec ladite valve bidirectionnelle (11), et
ledit premier réceptacle (19) comprend en outre un conduit d'entrée (6) en communication liquide avec ledit réceptacle inférieur (19) et est relié à un conduit d'évacuation (5) dont une extrémité mène à ladite valve bidirectionnelle (11), **caractérisé en ce que**,
ledit conduit d'entrée (6) comprend une valve (18) ayant une densité surfacique de 0,018 à 0,021 mm²/gramme.

2. Appareil électroménager selon la revendication 1, dans lequel ledit mécanisme de poussée (16) comporte une tige engagée de manière coulissante dans un logement de ressort de ladite valve bidirectionnelle (11) dans lequel un ressort (17) sollicite une bille contre ladite tige.

3. Appareil électroménager selon la revendication 1 ou 2, dans lequel ladite valve bidirectionnelle (11) transporte l'eau chauffée de retour vers ledit premier réceptacle (19) en réponse à l'absence dudit mécanisme de poussée (16) dudit deuxième réceptacle (15).

4. Appareil électroménager selon la revendication 1, dans lequel ledit conduit d'entrée (6) est relié au dit conduit d'évacuation (5) par l'intermédiaire d'un conduit intermédiaire (2) se trouvant de manière périmétrique sur le fond dudit réceptacle inférieur (19).

5. Appareil électroménager selon la revendication 1 ou 4, dans lequel ledit conduit d'évacuation (5) et ledit conduit d'entrée (6) s'étendent perpendiculairement au plan dudit conduit intermédiaire (2) parallèle au fond dudit réceptacle inférieur (19).

6. Appareil électroménager selon l'une quelconque des revendications précédentes, dans lequel ledit appareil comprend des premiers moyens de chauffage électriques (3) ayant une résistance plus grande par rapport à des deuxièmes moyens de chauffage électriques (4) avec une résistance plus faible.

7. Appareil électroménager selon la revendication 6, dans lequel ladite résistance (3) de plus grande puissance est encerclée par la résistance de plus faible puissance s'étendant de manière périmétrique au-dessous de laquelle ledit conduit intermédiaire (2) est disposé.
